# EUROPEAN PATENT SPECIFICATION

(11) **EP 2 157 768 B1**
(45) Date of publication and mention of the grant of the patent: **02.04.2014**
(21) Application number: 08792440.3
(22) Date of filing: 13.08.2008
(51) Int. Cl.: H04M 1/725, H04M 1/2745

(54) **COMMUNICATION DEVICE, COMMUNICATION ANALYSIS METHOD, AND COMMUNICATION ANALYSIS PROGRAM**
KOMMUNIKATIONSGERÄT, KOMMUNIKATIONSUNTERSUCHUNGSVERFAHREN UND KOMMUNIKATIONSUNTERSUCHUNGSPROGRAM
DISPOSITIF DE COMMUNICATION, PROCÉDÉ D'ANALYSE DE COMMUNICATION, ET PROGRAMME D'ANALYSE DE COMMUNICATION

(30) Priority: 13.08.2007 JP 2007210746
(43) Date of publication of application: 24.02.2010
(73) Proprietor: NEC Corporation, Minato-ku Tokyo 108-8001 (JP)
(72) Inventor: TOMITA, Yuusuke, Tokyo 108-8001 (JP)
(74) Representative: Betten & Resch
(86) International application number: PCT/JP2008/064552
(87) International publication number: WO 2009/022713

(56) References cited:
- EP-A1- 1 686 527
- EP-A1- 1 783 989
- WO-A1-02/082343
- JP-A- 2003 233 564
- JP-A- 2004 090 109
- JP-A- 2004 304 719
- JP-A- 2007 129 609
- US-A1- 2004 017 376

## Description

### Technical Field

The present invention relates to a communication device, a communication analysis method, and a communication analysis program capable of analyzing communications.

### Background Art

Communication devices that analyze the status of communications based on the communication history and provide information to the user are currently proposed.

For example, Patent Literature 1 describes a technique for using mobile communications to provide users with a motivation to communicate with many people.

Patent Literature 2 describes a technique for enabling communications using an application program optimum for a communication partner.

Furthermore, Patent Literature 3 describes an affinity fortune-telling feature for increasing the system usage frequency by each user of a social networking service (SNS).

Patent Literature 4 describes determining, based on history information on communications between the user and a communication partner thereof, a display location of an image representing the communication partner on a display screen, so as to improve access to communication partners with whom the user is highly likely to communicate.

Patent Literature 1: Unexamined Japanese Patent Application KOKAI Publication No. 2001-276436
Patent Literature 2: Unexamined Japanese Patent Application KOKAI Publication No. 2006-59131
Patent Literature 3: Unexamined Japanese Patent Application KOKAI Publication No. 2006-350779
Patent Literature 4: Unexamined Japanese Patent Application KOKAI Publication No. 2007-129609

Patent literature 5: European patent application EP 1783989 directed to a communication terminal apparatus and computer program for graphical display of contacts discloses a communication terminal apparatus having a phone directory function.

Patent literature 6: European patent application EP 1686527 directed to a content navigation service discloses a computer system providing a personalized list of items for the user based on specific characteristics of that user.

Patent literature 7: US patent application No. US 2004/0017376 entitled "Graphic entries for interactive directory" discloses an apparatus and method for communication device having a display for geographically organizing communication patterns of the user. Visual attributes of the images associated with specific parties are varied dynamically as communication patterns of the user with specific parties change.

### Disclosure of the Invention

### Problem to be Solved by the Invention

In the techniques described in Patent Literature 1 to 3, the mobile phone needs to cooperate with a server device to afford desired services to users. Thus, the services are unavailable when the mobile phone is offline.

The technique described in Patent Literature 4 facilitates communications between the user and frequent communication partners thereof. However, this technique makes it difficult for the user to select, as communication partners, partners with whom the user does not frequently contact. Communications with such partners can even decrease.

The present invention is made to solve the foregoing problems. The present invention is directed to providing a communication device, a communication analysis method, and a communication analysis program that can be used even when the communication device is offline as well as for facilitating communications with infrequent communication partners.

### Means for Solving the Problem

To achieve the foregoing object, a communication device according to a first aspect of the present invention is disclosed in independent claim 1.

To achieve the foregoing object, a communication analysis method according to a second aspect of the present invention is disclosed in independent claim 8.

To achieve the foregoing object, a communication analysis program according to a third aspect of the present invention is disclosed in claim 10.

### Effect of the Invention

According to the present invention, it is possible to allow the communication device to display the degree of closeness even when it is offline.

### Brief Description of Drawings

FIG. 1 is an illustrative diagram illustrating an overview of a communication analysis system.
FIG. 2 is a block diagram illustrating an example configuration of a mobile phone comprising a communication analysis system.
FIG. 3 is a functional block diagram illustrating an example configuration of a communication analysis system.
FIG. 4 is a flowchart illustrating an example process of storing base data and evaluation score calculation data.
FIG. 5 is a flowchart illustrating an example process of displaying a degree of closeness.
FIG. 6 is a functional block diagram illustrating an example minimum configuration of a communication analysis system.

### Explanation of Reference Numerals

- [0016] 10: mobile phone
- 11: CPU
- 12: storage unit
- 13: wireless communication unit
- 14: sound signal processing unit
- 15: speaker
- 16: microphone
- 17: display unit
- 101: communication analysis engine
- 110: action control unit
- 120: history utilization unit
- 121: characteristic value extraction unit
- 122: degree of closeness calculation unit
- 131: display control unit
- 130: communication display tool
- 151: rule DB
- 152: operation history DB

### Best Mode for Carrying out the Invention

Hereinafter, a communication analysis system embedded in a mobile phone, which is assumed as a communication device according to the present invention, will be described with reference to the drawings.

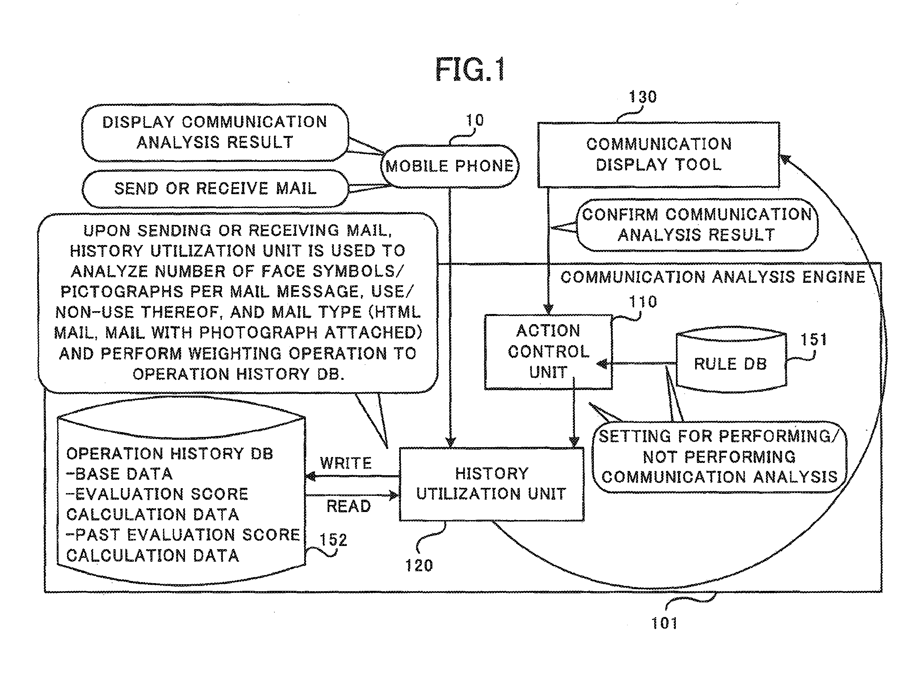

FIG. 1 is an illustrative diagram illustrating an overview of a communication analysis system embedded in a mobile phone 10 according to this embodiment.

The mobile phone 10 has call and mail sending/receiving features as well as a communication analysis system. For example, "communication analysis" refers to analyzing data on communications of the mobile phone 10, including the history of mail transmissions and receptions, and calculating the degree of closeness (to be described later) to communication partners, in order to clarify the status of communications with communication partners.

The communication analysis system includes a communication analysis engine 101 and a communication display tool 130. For example, the communication analysis engine 101 calculates the degree of closeness to a partner with whom mails have been exchanged based on the contents and history of the mails and allows the user to confirm the degree of closeness via the communication display tool 130. The communication display tool 130 presents the degree of closeness to the communication partners registered in the phonebook by distance - i.e., a shorter distance for a greater degree of closeness and a longer distance for a smaller degree of closeness. For example, the communication analysis system provides the user with a sense of connection with frequent communication partners even when the user cannot meet them. This system also provides the user with a motivation to contact communication partners with whom there have been no contact for a long time.

An action control unit 110 searches a rule DB (DataBase) 151 upon occurrence of an event, extracts information on the details of a process to be executed by a history utilization unit 120 in response to the event that occurred, and outputs the extracted information to the history utilization unit 120. For example, when a "send or receive mail" event or an "launch the communication display tool 130" event occurs, the action control unit 110 extracts information on the "details of the process to be executed" and outputs the extracted "details of the process to be executed" to the history utilization unit 120. The process to be executed by the history utilization unit 120 will be described later.

The history utilization unit 120 executes the process based on the details output by the action control unit 110.

For example, when the "send or receive mail" event occurs, the history utilization unit 120 extracts values indicating predetermined characteristics from the sent or received mail and stores the extracted values in an operation history DB 152 as base data. Also, the history utilization unit 120 calculates the degree of closeness to each communication partner based on the base data and stores the calculated degree of closeness in the operation history DB 152 as evaluation score calculation data.

Additionally, for example, when the "launch the communication display tool" event occurs, the history utilization unit 120 extracts the evaluation score calculation data stored in the operation history DB 152 and outputs the extracted data to the communication display tool 130.

The communication display tool 130 is launched based on user operation. The communication display tool 130 controls the display of the degree of closeness to each communication partner so that the user can visually confirm the degree of closeness based on the evaluation score calculation data extracted by the history utilization unit 120.

The rule DB 151 is a database for storing rule information for associating "events", which are triggered by functions of the mobile phone 10, with "actions", which indicate the details of a process to be executed by the history utilization unit 120. The rule information includes, for example, information on whether or not communication analysis is to be performed.

The operation history DB 152 is a database for storing base data, evaluation score calculation data, and past evaluation score calculation data. The base data is the base for calculating the evaluation score calculation data. The evaluation score calculation data is calculated based on the base data. The past evaluation score calculation data is sorted in the ascending or descending order for a predetermined period based on the evaluation score calculation data. The details of the base data, the evaluation score calculation data, and the past evaluation score calculation data will be described later.

Next, a basic configuration of the mobile phone 10 is explained.

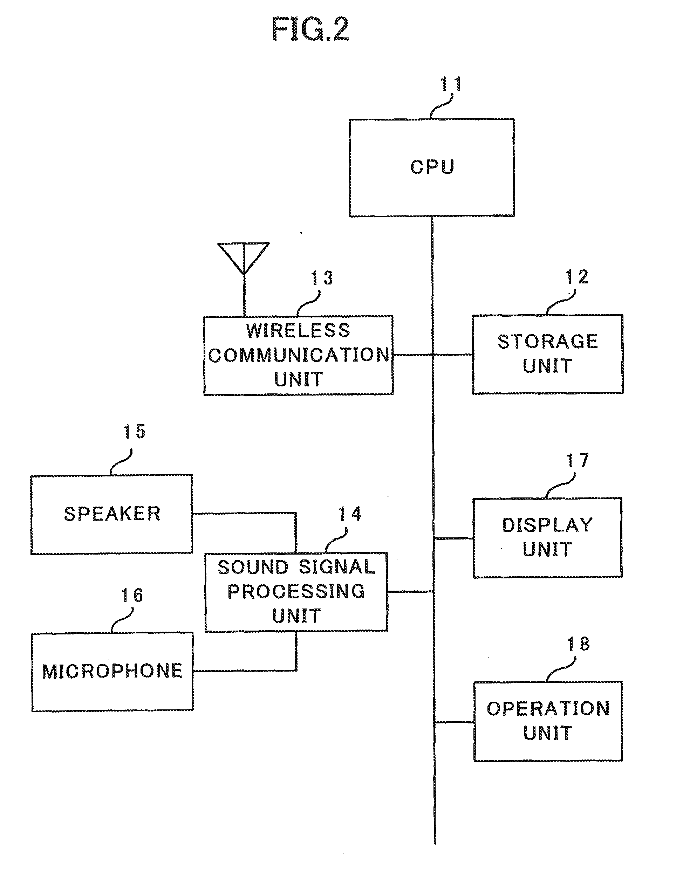

As shown in FIG. 2, the mobile phone 10 comprises a CPU 11, a storage unit 12, a wireless communication unit 13, a sound signal processing unit 14, a speaker 15, a microphone 16, a display unit 17, and an operation unit 18.

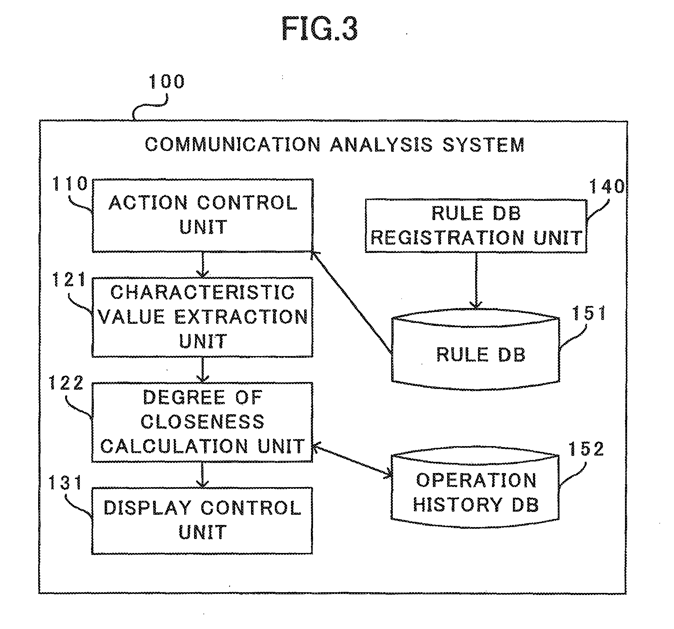

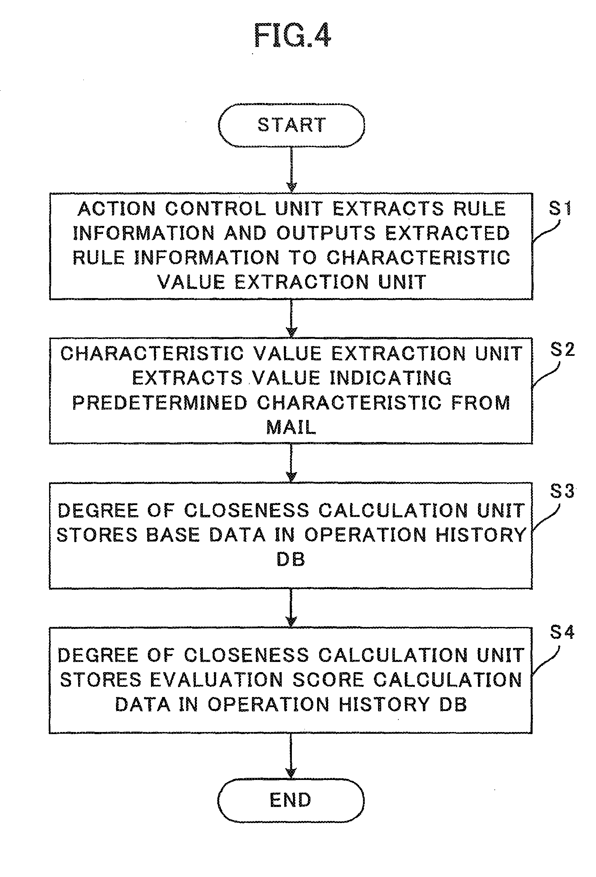

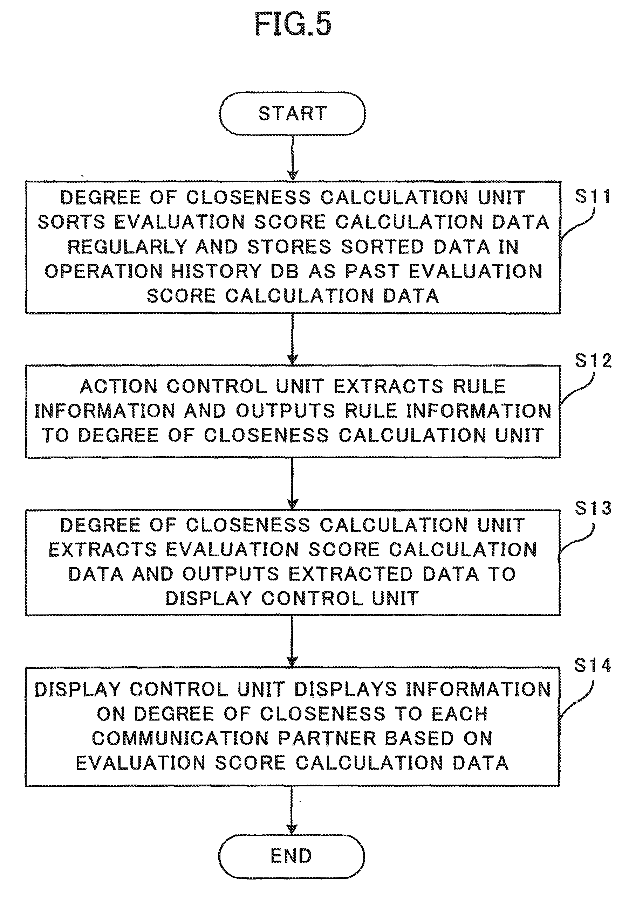

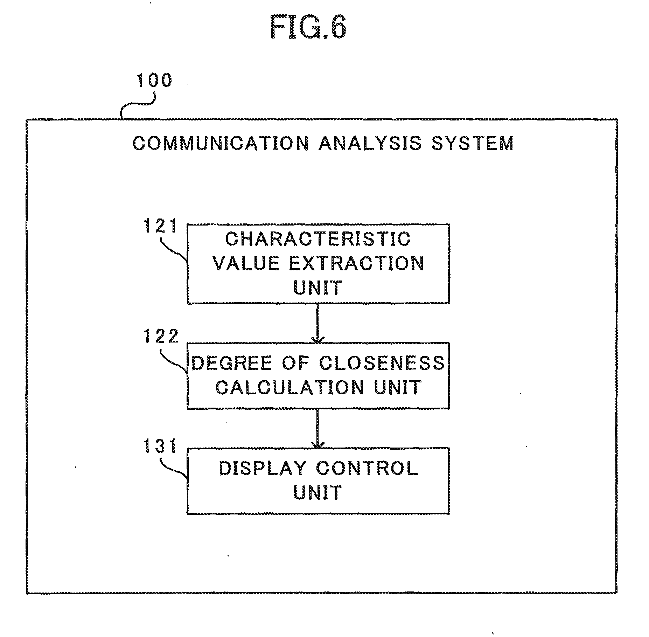

The CPU (Central Processing Unit) 11 is a central calculation processing device that performs overall control of the mobile phone 10 according to programs in the storage unit 12. According to this embodiment, the CPU 11 achieves the features that will be described later in reference to FIGS. 3 and 6 and performs the steps explained in reference to FIGS. 4 and 5.

The storage unit 12 has a program region and a data region. Stored in the program region are programs for achieving this embodiment according to the operation procedures in FIGS. 4 and 5, which will be described later. The data region includes the rule DB 151 and the operation history DB 152, which will be described later.

The wireless communication unit 13 comprises a wireless unit, a baseband unit, and the like, and performs data transmission and reception with the nearest base station.

During a call, the sound signal processing unit 14 receives a reception signal from the wireless communication unit 13, demodulates a reception baseband signal from the reception signal, and outputs sound from the speaker 15 via the sound signal processing unit 14. Also, the sound signal processing unit 14 incorporates sound data input from the microphone 16, encodes the sound data as a transmission baseband signal, and outputs the encoded signal from the antenna via the wireless communication unit 13.

The display unit 17 comprises a display screen (rectangular screen) which uses high-definition liquid crystal or organic Electro Luminescence (EL), performs control according to instructions from the CPU 11, and display data and images.

The operation unit 18 performs dial input, character input, command input, and the like.

As illustrated in FIG. 3, the communication analysis system 100, which has been explained with reference to FIG. 1, includes the action control unit 110, a characteristic value extraction unit 121, a degree of closeness calculation unit 122, a display control unit 131, a rule DB registration unit 140, the rule DB 151, and the operation history DB 152. The characteristic value extraction unit 121 and the degree of closeness calculation unit 122 are achieved mainly by the history utilization unit 120, which is illustrated in FIG. 1, as well as by the CPU 11 and the storage unit 12, which are illustrated in FIG. 2. The display control unit 131 is achieved by the communication display tool 130, which is illustrated in FIG. 1, as well as by the CPU 11 and the display unit 17, which are illustrated in FIG. 2.

Specifically, programs for causing the mobile phone 10 to realize the features of the components included in the communication analysis system 100 are stored in the program storage region of the storage unit 12 mounted in the mobile phone 10. The components included in the communication analysis system 100 - namely, the action control unit 110, the characteristic value extraction unit 121, the degree of closeness calculation unit 122, the display control unit 131, and the rule DB registration unit 140 - are realized by programs executed by the CPU 11. Moreover, the rule DB 151 and the operation history DB 152 are stored in the data storage region of the storage unit 12.

The characteristic value extraction unit 121 extracts values indicating predetermined characteristics from the contents of mails exchanged with a partner registered in the phonebook based on the rule information output by the action control unit 110.

The degree of closeness calculation unit 122 stores, in the operation history DB 152, the values indicating the predetermined characteristics extracted by the characteristic value extraction unit 121 as base data.

The base data includes information that associates a cumulative value of the values indicating the predetermined characteristics, which are included in mails exchanged with partners registered in the phonebook, with the partners registered in the phonebook. The base data is information including, as values indicating characteristics, for example, the time of day of mail receptions and transmissions, the day of week thereof, the number (frequency) of receptions and transmissions in a predetermined time period, the frequency of use of a face symbol or a pictograph, the type of mail, the duration of communications, and the time of day of communications. The type of mail refers to, for example, information on mail classification of text and html or on whether a file such as a photograph is attached.

The degree of closeness calculation unit 122, for each destination user of a sent mail or each sender user of a received mail, calculates a cumulative value by adding the base data value already stored in the operation history DB 152 and the values indicating the predetermined characteristics extracted by the characteristic value extraction unit 121. Then the degree of closeness calculation unit 122 overwrites the base data based on the calculated cumulative value and stores the base data in the operation history DB 152. The history utilization unit 120 may calculate the cumulative value after performing a predetermined weighting operation to the extracted values indicating the characteristics.

The degree of closeness calculation unit 122 may regard a sent or received mail as a business mail and exempt the mail from mails to be subject to the communication analysis when the type of the mail is classified as a mail attached with a predetermined document file, spreadsheet data, or the like. Thus, it is possible to perform the communication analysis only for personal communication partners.

The evaluation score calculation data is, for example, information on the degree of closeness to each communication partner. The degree of closeness calculation unit 122 calculates the degree of closeness as evaluation score calculation data corresponding to one communication partner and stores the calculated degree of closeness in the operation history DB 152. This calculation of the degree of closeness is made based on base data associated with the one communication partner being the destination user of sent mails as well as the sender user of received mails. The degree of closeness calculation unit 122 may, for example, perform a predetermined weighting operation to the base data associated with the destination user of sent mails and the base data associated with the sender user of received mails in order to calculate the degree of closeness.

Furthermore, the degree of closeness calculation unit 122 regularly sorts the evaluation score calculation data in the descending order of evaluation (degree of closeness) and stores the sorted data in the operation history DB 152 as past evaluation score calculation data. For example, the degree of closeness calculation unit 122 sorts, on a weekly basis, the evaluation score calculation data in the descending order of evaluation - i.e., degree of closeness to communication partners - and stores the sorted data in the operation history DB 152 as past evaluation score calculation data for each week. The degree of closeness calculation unit 122 may sort the evaluation score calculation data in the descending or ascending order.

The degree of closeness calculation unit 122 multiplies the evaluation score calculation data by a predetermined rate for each predetermined time period and overwrites thereupon. For example, the degree of closeness calculation unit 122 may, upon lapse of a predetermined amount of time, use a decrease rate (predetermined rate) to incorporate temporal changes in the degree of closeness and thereby reduce the degree of closeness.

Furthermore, the degree of closeness calculation unit 122 extracts the sorted past evaluation score calculation data stored in the operation history DB 152 based on the rule information output by the action control unit 110 and outputs the extracted data to the display control unit 131.

The display control unit 131 controls the display of information on the degree of closeness to each communication partner (communication information) based on the past evaluation score calculation data extracted by the degree of closeness calculation unit 122.

The rule DB registration unit 140 sets rule information based on the contents of operations by the user and registers the set rule information in the rule DB 151. For example, the rule DB registration unit 140 may set, as rule information, a scenario for enabling appropriate communication analysis for each user.

Next, operations for communication analysis according to this embodiment are described with reference to FIGS. 4 and 5. Hereinafter, an explanation is made for a situation where two types of rule information are stored in the rule DB 151. One type of rule information is on a "send or receive mail" event and an "execute a process of storing base data and evaluation score calculation data in the operation history DB 152 for a mail address registered in the phonebook" action. The other type of rule information is on a "launch the communication display tool 130" event and an "execute a process of outputting the degree of closeness to each communication partner based on evaluation score calculation data" action. The rule information is set by the rule DB registration unit 140 and registered in the rule DB 151 via user operation.

First, a process of storing the base data and the evaluation score calculation data is described. FIG. 4 is a flowchart illustrating an example process of storing the base data and the evaluation score calculation data.

Upon occurrence of an event, the action control unit 110 searches the rule DB 151, extracts rule information corresponding to the event that occurred, and outputs the extracted rule information to the characteristic value extraction unit 121 (step S1). Hereinafter, it is assumed that in the phonebook of the mobile phone 10 owned by a user α, close friends β and γ are registered. It is further assumed that the user a sends a mail to or receive a mail from the friend β daily and that the user α sends a mail to or receive a mail from the friend γ once or twice a week. For example, when the user a sends a mail to the friend β, the action control unit 110 searches the rule DB 151 and extracts rule information. The extracted rule information corresponds to the "send or receive a mail" event and indicates the "execute a process of storing base data and evaluation score calculation data in the operation history DB 152 for a mail address registered in the phonebook" action.

The characteristic value extraction unit 121 executes the following process based on the rule information output by the action control unit 110. For example, when the destination of a sent mail is registered in the phonebook, the characteristic value extraction unit 121 extracts values indicating predetermined characteristics, such as the type of mail and the frequency of use of a face symbol or a pictograph, from the contents of the sent mail (step S2).

For example, when the base data associated with the friend β being the destination of a mail, is already stored in the operation history DB 152, the degree of closeness calculation unit 122 calculates a cumulative value by adding the values extracted by the characteristic value extraction unit 121 in step S2 and the base data values that are already stored, Then the base data is overwritten and stored in the operation history DB 152 by the degree of closeness calculation unit 122 (step S3). When the base data associated with the friend β being the destination of the sent mail, is not stored in the operation history DB 152, the base data can be newly stored in the operation history DB 152.

Next, the degree of closeness calculation unit 122 calculates, for example, the degree of closeness as evaluation score calculation data corresponding to one communication partner β. This calculation of the degree of closeness is made based on base data associated with the friend β being the destination user of sent mails as well as the sender user of received mails. Then the degree of closeness calculation unit 122 stores the calculated degree of closeness in the operation history DB 152 as the evaluation score calculation data (step S4). Here, the degree of closeness calculation unit 122 may, for example, perform a predetermined weighting operation such as multiplying the base data value associated with the friend β being the destination of a sent mail, by 10 and multiplying the base data value associated with the friend β being the sender of a received mail, by 5, and then based thereon calculate the degree of closeness.

Next, a process of displaying the degree of closeness is described. FIG. 5 is a flowchart illustrating an example process of displaying the degree of closeness. Hereinafter, it is assumed that, for last two weeks, the user α has sent a mail to and received a mail from the friend β every day, but the user α unknowingly did not send a mail to and receive a mail from the friend γ.

The degree of closeness calculation unit 122 regularly sorts the evaluation score calculation data in the descending order of evaluation (degree of closeness) and stores the sorted data in the operation history DB 152 as past evaluation score calculation data (step S11). For example, the degree of closeness calculation unit 122 sorts evaluation score calculation data every week. In turn, the degree of closeness calculation unit 122 stores, as evaluation score calculation data of a certain week, the evaluation score calculation data sorted in the descending order of degrees of closeness (for example, the order of friend β, friend γ) in the operation history DB 152.

Upon occurrence of an event, the action control unit 110 searches the rule DB 151, extracts the rule information corresponding to the event that occurred, and outputs the extracted rule information to the degree of closeness calculation unit 122 (step S12). For example, upon launch of the communication display tool by the user α, the action control unit 110 searches the rule DB 151 and extracts rule information on the "execute a process of outputting the degree of closeness to each communication partner based on evaluation score calculation data" action as rule information corresponding to the "launch the communication display tool" event.

The degree of closeness calculation unit 122 extracts the sorted evaluation score calculation data stored in the operation history DB 152 based on the rule information output by the action control unit 110 and outputs the extracted data to the display control unit 131 (step S13), Here, the degree of closeness calculation unit 122 extracts evaluation score calculation data of a period specified by the user. For example, the degree of closeness calculation unit 122 extracts, as specified by the user, data such as the evaluation score calculation data of last one week or the evaluation score calculation data of two weeks ago.

Based on the output evaluation score calculation data, the display control unit 131 executes control for displaying information on the degree of closeness to each communication partner on a display apparatus such as a display device (step S14). The display control unit 131 may also control the display to illustrate, on a temporal basis, the degree of closeness between the user and a specific partner from the past to the present.

Furthermore, it is preferable for the display control unit 131 to display the degree of closeness on the display device so that it is represented by distance. For example, the display control unit 13 displays the user α and the friend β at display positions on the display device that are close to each other. Moreover, the display control unit 131 displays the friend γ at a display position on the display device so that its distance to the user α is greater than the distance between the display positions of the user α and the friend β. In the foregoing example, the user α can confirm that the distance to the friend β is short, while the distance to the friend γ has increased. Therefore, the user α may realize that mails have not been exchanged with the friend γ and thus is motivated to send a mail to the friend γ.

As described above, according to this embodiment, the degree of closeness to a specific communication partner is notified to each user. Therefore, even when it is difficult to take time to meet an associate with whom the user frequently contacts, the user can have a sense of connection with that associate and is motivated to contact an associate with whom the user has not been in contact. Additionally, changes from the past to the present in the degree of closeness between the user and a specific partner can be confirmed on a temporal basis.

Furthermore, evaluation scores sorted in the descending or ascending order are stored as evaluation score calculation data. The limited resources mounted on the mobile phone, such as a CPU, may be thus used efficiently for displaying the degree of closeness.

The communication analysis using mail is made for mails exchanged with partners registered in the phonebook of the mobile phone. Moreover, business mails attached with a predetermined document are not subject to this communication analysis. This communication analysis is intended only for non-business mails exchanged with specific partners.

In response to an event occurred to the mobile phone, the user may set, as rule information, a predetermined action indicating a process to be executed by the mobile phone. Therefore, appropriate communication analysis can be performed for each user.

The foregoing embodiment has illustrated communication analysis performed for mail transmissions and receptions. Communication analysis may also be performed for calls with the mobile phone. In such a case, the communication analysis engine of the mobile phone calculates, for example, the degree of closeness based on the number of calls, call durations, and the history of outgoing and incoming calls. Moreover, based on the use frequency of the menu function of the mobile phone, a selected menu may be analyzed and the analysis result may be displayed.

FIG. 6 is a functional block diagram illustrating an example minimum configuration of the communication analysis system. The communication analysis system 100 illustrated in FIG. 6 includes the characteristic value extraction unit 121, the degree of closeness calculation unit 122, and the display control unit 131.

The characteristic value extraction unit 121 extracts values indicating predetermined characteristics from data on communications of the mobile phone 10 such as mail and call histories.

The degree of closeness calculation unit 122 calculates, for each communication partner, the degree of closeness (evaluation score calculation data) between the user and the communication partner based on the values indicating predetermined characteristics extracted by the characteristic value extraction unit 121.

The display control unit 131 controls the display for enabling the user to visually confirm the degree of closeness based on the degree of closeness calculated by the degree of closeness calculation unit 122.

In the foregoing exemplary embodiment, a mobile terminal device with the characteristic configurations described in (1) to (7) below is illustrated.

(1) A mobile phone includes: a characteristic value extraction unit for extracting a predetermined characteristic value from data on a communication of the mobile phone (realized by, for example, the characteristic value extraction unit 121); a degree of closeness calculation unit for calculating, for each communication partner, a degree of closeness between a user and the communication partner based on the characteristic value extracted by the characteristic value extraction unit (realized by, for example, the degree of closeness calculation unit 122); and a display control unit for executing control for displaying the degree of closeness calculated by the degree of closeness calculation unit (realized by, for example, the display control unit 131).

(2) The mobile phone further includes a history database for storing the degree of closeness calculated by the degree of closeness calculation unit (realized by, for example, the operation history DB 152). The degree of closeness calculation unit of the mobile phone updates the degree of closeness stored in the history database by multiplying the degree of closeness by a predetermined rate for each predetermined period. The mobile phone with such a configuration can incorporate temporal changes in the degree of closeness.

(3) The characteristic value extraction unit of the mobile phone extracts a predetermined characteristic value from data on a communication with a partner preregistered in the mobile phone. The mobile phone with such a configuration can analyze the status of communications with a specific associate.

(4) The characteristic value extraction unit of the mobile phone extracts a type of an attached file as a predetermined characteristic value from a mail sent or received by the mobile phone, and the degree of closeness calculation unit of the mobile phone calculates a degree of closeness to each communication partner when the characteristic value extraction unit does not extract an attached file of a predetermined type. The mobile phone with such a configuration can exempt business mails from mails to be subject to the communication analysis.

(5) The degree of closeness calculation unit of the mobile phone sorts the calculated degrees of closeness for each predetermined period and stores the sorted degrees of closeness in a database, and the display control unit of the mobile phone executes control for displaying the sorted degrees of closeness stored in a history database. The mobile phone with such a configuration can efficiently use the limited resources mounted on the mobile phone, such as a CPU, for displaying the degree of closeness.

(6) The mobile phone further includes: a rule database for storing rule information in which an event of the mobile phone is associated with process data on a process to be executed in response to occurrence of the event (realized by, for example, the rule DB 151); and an action control unit for extracting the associated process data from the rule database in response to occurrence of the event (realized by, for example, the action control unit 110). The characteristic value extraction unit and the degree of closeness calculation unit of the mobile phone execute a process based on the process data extracted by the action control unit. The mobile phone with such a configuration can perform appropriate communication analysis.

(7) The mobile phone further includes a rule database registration unit capable of registering rule information in the rule database (realized by, for example, the rule DB registration unit 140). The mobile phone with such a configuration can appropriately perform communication analysis for each user.

The present invention is not limited to the foregoing embodiment, and various modifications and applications thereof can be made. For example, the present invention has been explained using a mobile phone as an example. The present application can be likewise applied to mobile devices, such as PDAs (Personal Data Assistance) and personal computers, as long as they have a communication function. It can also be applied to communication terminals and apparatuses of a fixed installation type using a land-line phone or the like.

A program that causes a computer with a communication function to execute the foregoing communication analysis system may be stored in a recording medium or the like for distribution thereof.

The present application is based on Japanese Patent Application No. 2007-210746 filed on August 13, 2007.

### Industrial Applicability

The present invention is applicable effectively to analyzing the status of communications using a communication device.

## Claims

1. A communication device (100) comprising:
a characteristic value extraction unit (121) for extracting, when a mail is sent or received, a type of an attached file as a predetermined characteristic value from the sent or received mail;
a degree of closeness calculation unit (122) for calculating, for each communication partner, a degree of closeness between a user and the each communication partner based on the characteristic value extracted by the characteristic value extraction unit when the characteristic value extraction unit does not extract an attached file of a predetermined type; and
a display control unit (131) for executing control for displaying the degree of closeness calculated by the degree of closeness calculation unit.

2. The communication device according to claim 1, further comprising:
a history database for storing the calculated degree of closeness in the history database, and, after a predetermined amount of time has elapsed since the degree of closeness was stored in the history database, reducing the stored degree of closeness.

3. The communication device according to claim 1 or 2, further comprising:
a history database (152) for storing the degree of closeness calculated by the degree of closeness calculation unit, wherein
the degree of closeness calculation unit is arranged to update the degree of closeness stored in the history database by multiplying the degree of closeness by a predetermined rate for each predetermined period.

4. The communication device according to claim 1 or 2, wherein
the characteristic value extraction unit is arranged to extract a predetermined characteristic value from data on a communication with a preregistered partner.

5. The communication device according to claim 1 or 2, wherein
the degree of closeness calculation unit is arranged to sort the calculated degrees of closeness for each predetermined period and store the sorted degrees of closeness in a history database, and
the display control unit is arranged to execute control for displaying the sorted degrees of closeness stored in the history database.

6. The communication device (151) according to claim 1 or 2, further comprising:
a rule database for storing rule information in which an event of the communication device is associated with process data on a process to be executed in response to occurrence of the event; and
an action control unit (110) for extracting the associated process data from the rule database in response to occurrence of the event, wherein
the characteristic value extraction unit and the degree of closeness calculation unit are arranged to execute a process based on the process data extracted by the action control unit.

7. The communication device according to claim 6, further comprising:
a rule database registration unit (140) capable of registering rule information in the rule database.

8. A communication analysis method comprising the steps of:
extracting, when a mail is sent or received, a type of an attached file as a predetermined characteristic value from the sent or received mail of a communication device;
calculating, for each communication partner, a degree of closeness between a user and the each communication partner based on the extracted characteristic value when the extracted predetermined characteristic value does not correspond to an attached file of a predetermined type; and
executing control for displaying the calculated degree of closeness.

9. The communication analysis method according to claim 8, further comprising the steps of:
storing the calculated degree of closeness in a history database; and
updating the degree of closeness stored in the history database by multiplying the degree of closeness by a predetermined rate for each predetermined period.

10. A communication analysis program comprising program code which, when executed by a computer, causes the computer to carry out the method of one of claims 8 or 9.

## Patentansprüche

1. Kommunikationsvorrichtung (100) umfassend:
eine Merkmalswertextraktionseinheit (121) zum Extrahieren, wenn eine Nachricht gesendet oder empfangen wird, eines Typs einer beigefügten Datei als einen vorbestimmten Merkmalswert aus der gesendeten oder empfangenen Nachricht;
eine Nähegradberechnungseinheit (122) zur Berechnung, für jeden Kommunikationspartner, eines Nähegrads zwischen einem Nutzer und jedem Kommunikationpartner basierend auf dem Merkmalswert, der von der Merkmalswertextraktionseinheit extrahiert wird, wenn die Merkmalswertextraktionseinheit nicht eine beigefügte Datei eines vorbestimmten Typs extrahiert; und
eine Anzeigesteuereinheit (131) zur Steuerungsausführung zum Anzeigen des Nähegrads, der von der Nähegradberechnungseinheit berechnet wird.

2. Kommunikationsvorrichtung nach Anspruch 1, ferner umfassend:
eine History-Datenbank zum Ablegen des berechneten Nähegrads in der History-Datenbank und zum Reduzieren des abgelegten Nähegrads, nachdem ein vorbestimmter Zeitbetrag, seit der Nähegrad in der History-Datenbank abgelegt wurde, abgelaufen ist.

3. Kommunikationsvorrichtung nach Anspruch 1 oder 2, ferner umfassend:
eine History-Datenbank (152) zum Ablegen des Nähegrads, der von der Nähegradberechnungseinheit berechnet wird, wobei
die Nähegradberechnungseinheit eingerichtet ist, um den Nähegrad, der in der History-Datenbank abgelegt ist, durch Multiplizieren des Nähegrads mit einer vorbestimmten Rate für jeden vorbestimmten Zeitraum zu aktualisieren.

4. Kommunikationsvorrichtung nach Anspruch 1 oder 2, wobei
die Merkmalswertextraktionseinheit eingerichtet ist, um einen vorbestimmten Merkmalswert aus Daten über eine Kommunikation mit einem vorregistrierten Partner zu extrahieren.

5. Kommunikationsvorrichtung nach Anspruch 1 oder 2, wobei die Nähegradberechnungseinheit eingerichtet ist, um die berechneten Nähegrade für jeden vorbestimmten Zeitraum zu sortieren und die sortierten Nähegrade in einer History-Datenbank abzulegen, und
die Anzeigesteuereinheit eingerichtet ist, um Steuerung zur Anzeige der sortierten Nähegrade, die in der History-Datenbank abgelegt sind, auszuführen.

6. Kommunikationsvorrichtung (151) nach Anspruch 1 oder 2, ferner umfassend:
eine Regeldatenbank zum Ablegen von Regelinformation, in welcher ein Ereignis der Kommunikationsvorrichtung zu Prozessdaten über einen Prozess, der als Antwort auf das Auftreten des Ereignisses ausgeführt werden soll, zugeordent ist; und
eine Aktionssteuereinheit (110) zum Extrahieren der zugeordneten Prozessdaten von der Regeldatenbank als Antwort auf das Auftreten des Ereignisses, wobei
die Merkmalswertextraktionseinheit und die Nähegradberechnungseinheit eingerichtet sind, um einen Prozess basierend auf den Prozessdaten, die von der Aktionssteuereinheit extrahiert sind, auszuführen.

7. Kommunikationsvorrichtung nach Anspruch 6, ferner umfassend:
eine Regeldatenbankregistriereinheit (140), die fähig ist, Regelinformation in der Regeldatenbank zu registrieren.

8. Verfahren zur Kommunikationsanalyse umfassend die Schritte:
Extrahieren, wenn eine Nachricht gesendet oder empfangen wird, eines Typs einer beigefügten Datei als einen vorbestimmten Merkmalswert aus der von einer Kommunikationsvorrichtung gesendeten oder empfangenen Nachricht;
Berechnen, für jeden Kommunikationspartner, eines Nähegrads zwischen einem Nutzer und jedem Kommunikationspartner basierend auf dem extrahierten Merkmalswert, wenn der extrahierte vorbestimmte Merkmalswert nicht einer beigefügten Datei eines vorbestimmten Typs entspricht, und
Steuerungsausführung zur Anzeige des berechneten Nähegrads.

9. Verfahren zur Kommunikationsanalyse nach Anspruch 8, ferner umfassend die Schritte:
Ablegen des berechneten Nähegrads in einer History-Datenbank; und
Aktualisieren des berechneten Nähegrads, der in der History-Datenbank abgelegt ist, durch Multiplizieren des Nähegrads mit einer vorbestimmten Rate für jeden vorbestimmten Zeitraum.

10. Programm zur Kommunikationsanalyse umfassend Programmcode, der bewirkt, wenn von einem Computer ausgeführt, dass der Computer das Verfahren eines der Ansprüche 8 oder 9 ausführt.

## Revendications

1. Dispositif de communication (100) comprenant :
une unité d'extraction de valeur caractéristique (121) destinée à extraire, lorsqu'un courriel est envoyé ou reçu, un type d'un fichier joint, sous la forme d'une valeur caractéristique prédéterminée, du courriel envoyé ou reçu ;
une unité de calcul de degré de proximité (122) destinée à calculer, pour chaque partenaire de communication, un degré de proximité entre un utilisateur et ledit chaque partenaire de communication, sur la base de la valeur caractéristique extraite par l'unité d'extraction de valeur caractéristique, lorsque l'unité d'extraction de valeur caractéristique n'extrait pas un fichier joint d'un type prédéterminé ; et
une unité de commande d'affichage (131) destinée à exécuter une commande visant à afficher le degré de proximité calculé par l'unité de calcul de degré de proximité.

2. Dispositif de communication selon la revendication 1, comprenant en outre :
une base de données d'historique destinée à stocker le degré de proximité calculé dans la base de données d'historique, et, après qu'un laps de temps prédéterminé s'est écoulé depuis le stockage du degré de proximité dans la base de données d'historique, à réduire le degré de proximité stocké.

3. Dispositif de communication selon la revendication 1 ou 2, comprenant en outre :
une base de données d'historique (152) destinée à stocker le degré de proximité calculé par l'unité de calcul de degré de proximité, dans lequel
l'unité de calcul de degré de proximité est agencée de manière à mettre à jour le degré de proximité stocké dans la base de données d'historique, en multipliant le degré de proximité par un taux prédéterminé pour chaque période prédéterminée.

4. Dispositif de communication selon la revendication 1 ou 2, dans lequel
l'unité d'extraction de valeur caractéristique est agencée de manière à extraire une valeur caractéristique prédéterminée de données sur une communication avec un partenaire préenregistré.

5. Dispositif de communication selon la revendication 1 ou 2, dans lequel
l'unité de calcul de degré de proximité est agencée de manière à trier les degrés de proximité calculés pour chaque période prédéterminée et à stocker les degrés de proximité stockés dans une base de données d'historique ; et
l'unité de commande d'affichage est agencée de manière à exécuter une commande visant à afficher les degrés de proximité stockés dans la base de données d'historique.

6. Dispositif de communication (151) selon la revendication 1 ou 2, comprenant en outre :
une base de données de règles destinée à stocker des informations de règles dans lesquelles un événement du dispositif de communication est associé à des données de processus sur un processus à exécuter en réponse à l'occurrence de l'événement ; et
une unité de commande d'action (110) destinée à extraire les données de processus associées de la base de données de règles, en réponse à l'occurrence de l'événement, dans lequel
l'unité d'extraction de valeur caractéristique et l'unité de calcul de degré de proximité sont agencées de manière à exécuter un processus sur la base des données de processus extraites par l'unité de commande d'action.

7. Dispositif de communication selon la revendication 6, comprenant en outre :
une unité d'enregistrement de base de données de règles (140) apte à enregistrer des informations de règles dans la base de données de règles.

8. Procédé d'analyse de communication comprenant les étapes consistant à :
extraire, lorsqu'un courriel est envoyé ou reçu, un type d'un fichier joint, sous la forme d'une valeur caractéristique prédéterminée, du courriel envoyé ou reçu, d'un dispositif de communication ;
calculer, pour chaque partenaire de communication, un degré de proximité entre un utilisateur et ledit chaque partenaire de communication, sur la base de la valeur caractéristique extraite, lorsque la valeur caractéristique prédéterminée extraite ne correspond pas à un fichier joint d'un type prédéterminé ; et
exécuter une commande visant à afficher le degré de proximité calculé.

9. Procédé d'analyse de communication selon la revendication 8, comprenant en outre les étapes consistant à :
stocker le degré de proximité calculé dans une base de données d'historique ; et
mettre à jour le degré de proximité stocké dans la base de données d'historique, en multipliant le degré de proximité par un taux prédéterminé pour chaque période prédéterminée.

10. Programme d'analyse de communication comprenant un code de programme qui, lorsqu'il est exécuté par un ordinateur, amène l'ordinateur à mettre en oeuvre le procédé selon l'une quelconque des revendications 8 ou 9.
